# EUROPEAN PATENT SPECIFICATION

(11) **EP 2 300 303 B1**
(45) Date of publication and mention of the grant of the patent: **28.12.2011**
(21) Application number: 09753829.2
(22) Date of filing: 22.05.2009
(51) Int. Cl.: B62D 33/06

(54) **TRACTOR CAB SUSPENSIONS**
TRAKTORFAHRERHAUSAUFHÄNGUNGEN
SUSPENSIONS DE CABINE DE TRACTEUR

(30) Priority: 28.05.2008 GB 0809612
(43) Date of publication of application: 30.03.2011
(73) Proprietor: Agco SA, 60026 Beauvais (FR)
(72) Inventor: BLIN, Laurent, F-60026 Beauvais Cedex (FR)
(86) International application number: PCT/EP2009/056242
(87) International publication number: WO 2009/144174

(56) References cited:
- WO-A-2008/051138
- US-A- 6 073 714
- US-A1- 2002 113 463

## Description

This invention relates to tractor cab suspensions which suspend the cab relative to a chassis of the tractor.

Such suspensions are well known which include a fluid damper/spring unit located at each corner of the cab. Problems arise, however, in controlling roll and transverse movement of the cab relative to the chassis.

United States patent application publication No. US-2002/0113463 discloses a driver's cab suspension for a truck in accordance with the preamble features of claim 1. The cab disclosed is suspended at each of its four corners by a respective spring. A stabilizer is arranged in the rear area of the cab transverse to the vehicle frame to support the driver's cab relative to rolling movements.

The objective technical problem is to provide a tractor cab suspension of a more robust construction for inhibiting transverse loads whilst still permitting vertical movement.

Thus according to the present invention there is provided a tractor cab suspension for suspending a tractor cab from an associated chassis, each corner of the cab being supported by fluid damper/spring unit, the damper/spring unit at each of the two front corners of the cab being connected with the chassis via a link of a fixed length and which extends generally transverse relative to the chassis and is pivoted at one end on the chassis and at the other end on the cab about axes which extend generally longitudinal relative to the chassis to allow generally vertical movement of the cab relative to the chassis but resist transverse movement of the cab relative to the chassis, and a roll bar acting between the cab and chassis to control roll of the cab relative to the chassis.

Such a cab suspension provides improve control of transverse movement and roll of the cab relative to the chassis.

Limiting means are preferably provided to limit the range of pivoting movement of the link. The limiting means may comprise a longitudinally extending pin which is slidably engaged within a guide slot. In a preferred arrangement the guide slot is provided by an arcuate cut out in an extension of the link and the pin is held relative to the chassis. Advantageously, by forming the guide slot integrally with the link, the number of components required is reduced. The damper/spring unit at each of the two rear corners of the cab are preferably connected with the cab via a support arm which has a single degree of freedom in the vertical direction. Limiting means may be provided to limit the range of vertical movement of the support arm. For example, the rear limiting means may include a vertically extending slot formed in the support arm and a longitudinally extending pin held relative to the chassis which is slidably engaged within said slot.

The fluid damper of each damper/spring unit may act through a fixed damping orifice to provide passive damping of the cab relative to the chassis.

Alternatively, the fluid damper of each damper/spring unit may act through a variable damping orifice, the size of the damping orifice being varied in response to the variation of one or more tractor operating parameters to provide semi-active damping of the cab relative to the chassis.

Each damper preferably includes a piston moveable in a chamber with damping being achieved by movement of fluid from one side of the piston to the other via the orifice.

In such a damper fluid is supplied to and exhausted from either side of the piston of each fluid damper via a solenoid operated fluid flow control valve to adjust the height of the cab relative to the chassis.

One or more height sensors may be provided which provide an indication of the height of the cab relative to the chassis to a control unit, the control unit controlling the operation of the solenoid operated fluid flow control valves to maintain a specified cab height relative to the chassis.

The tractor operating parameters in response to which the size of the damping orifice may be varied may include one or more of the following namely cab position relative to the chassis, vehicle speed, brake application, throttle position and gear selected.

Preferably the roll bar comprises a pair of arms which extend generally longitudinally relative to the chassis, the aims being pivoted at their first ends on the chassis about axes generally transverse to the chassis and rigidly connected at their second ends by an torsion bar which extends generally transverse relative to the chassis, the torsion bar also being pivotally connected with the cab for pivoting about its longitudinal axis so that any tendency of the cab to roll relative to the chassis loads the torsion bar in torsion.

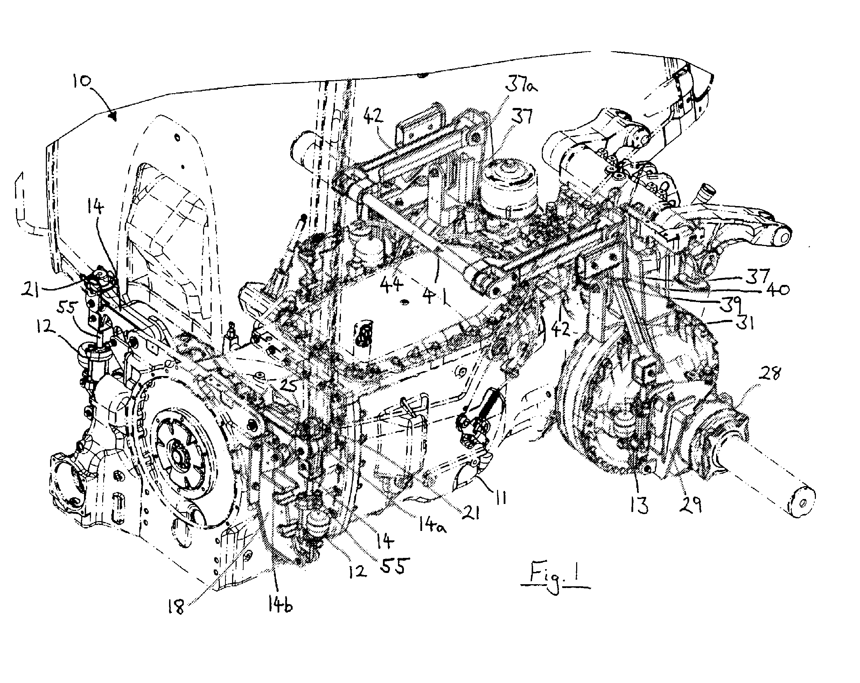

The present invention will now be described, by way of example only, with reference to the accompanying drawings in which:-
- Figure 1 shows a perspective view of a tractor cab suspension in accordance with the present invention;
- Figure 2 shows a perspective view of the damper/spring unit and roll bar configuration of the system of Figure 1;

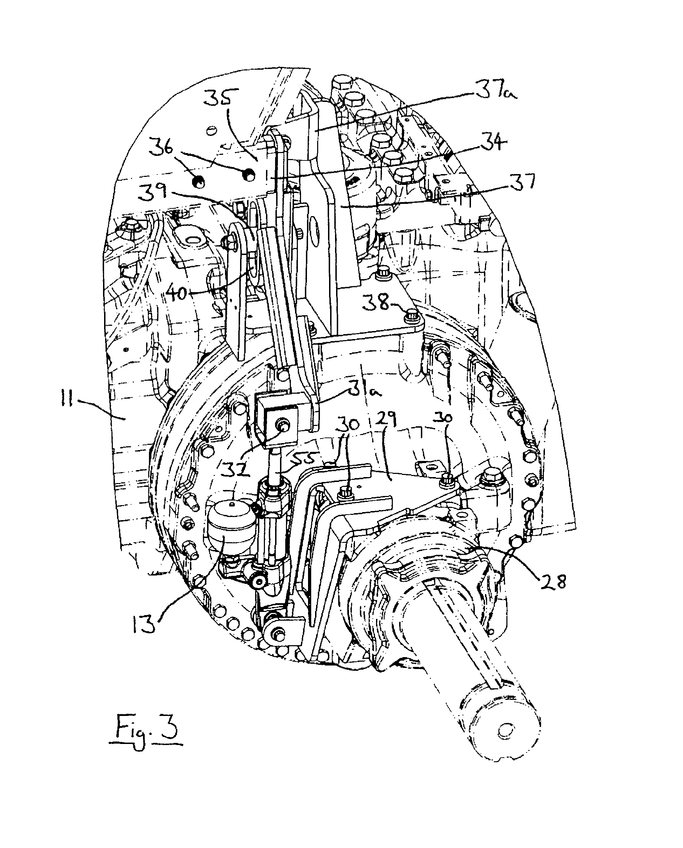

- Figure 3 shows a perspective view of one of the rear damper/spring units of the system of Figure 1;
- Figure 4 shows a side view, partly in section of the roll bar mounting of the system of Figure 1;

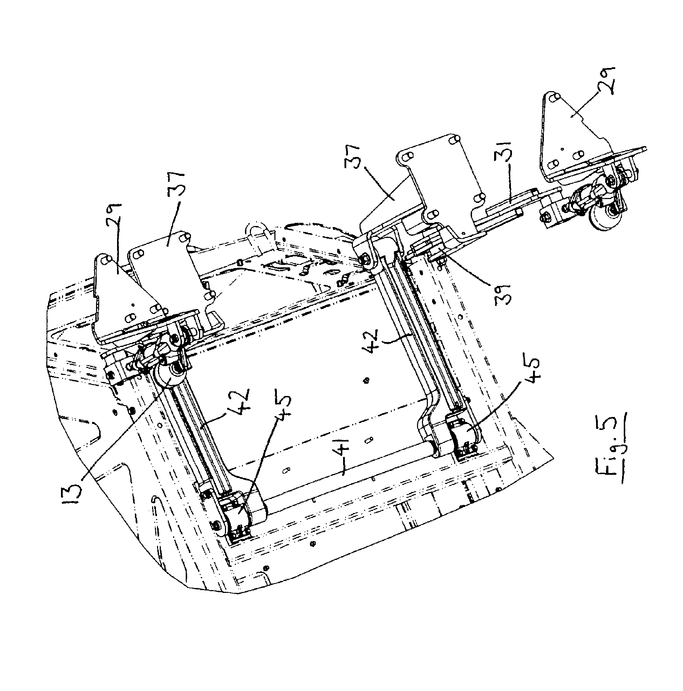

- Figure 5 shows a perspective view from beneath of part of the suspension system again showing the roll bar mounting arrangements, and
- Figure 6 shows diagrammatically a passive fluid damping a spring circuit suitable for use in a tractor cab suspension in accordance with the present invention.

Referring to the drawings, a cab 10 is suspended from a tractor chassis 11 by two front damper/spring units 12 and two rear damper/spring units 13.

Each front damper/spring unit 13 acts on the outer end 14a of a link 14 whose inner end 14b is mounted on the chassis 11 via rubber bush 15 carried on a bolt 16 which extends through mounting ears 17 formed integrally on the chassis.

Each front damper/spring unit is itself mounted on the chassis via a support bracket 18 which is bolted at 19 to the chassis. The front damping/spring unit 12 is connected with the link 14 by a bolt 20 which passes through a rubber bush (not visible) in an aperture in the link 14.

The outer end 14a of each link 14 is connected with the cab via a mounting disc arrangement 21 which is described and claimed in the Applicant's co-pending UK patent application number GB0803998.4 and will not therefore be described herein in detail. The mounting disc arrangement 21 is secured to the end 14a of link 14 by a bolt 22 which extends through a rubber bush (not visible) again mounted in an aperture of the end 14a of link 14.

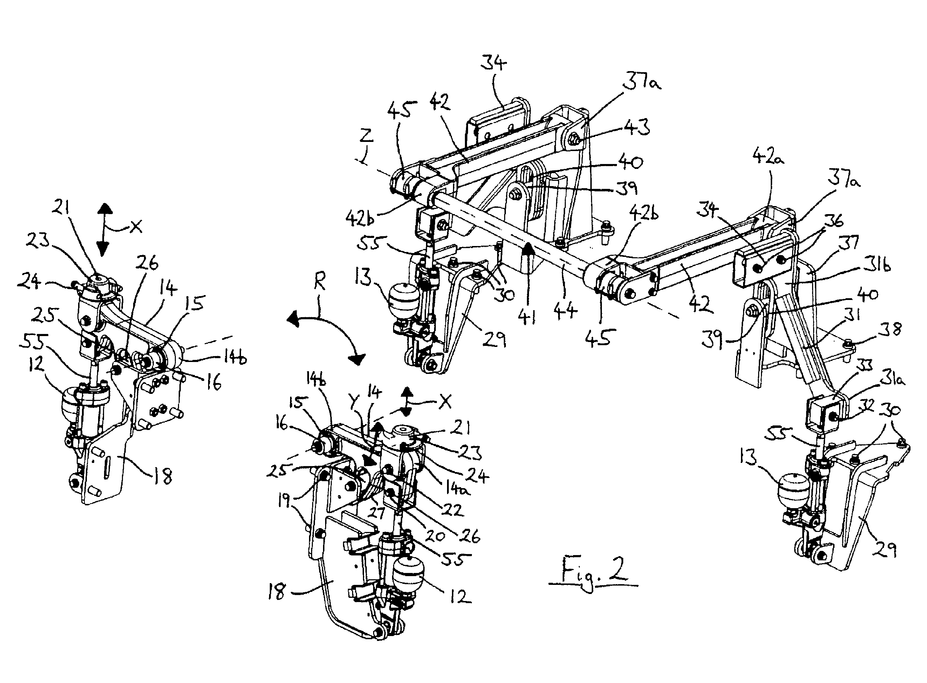

As can be seen from Figure 2, the disc mounting arrangement 21 has an upper cone shaped portion 23 which is received in a cooperating cone shaped socket provided in a component secured to the under surface of the front corner of the cab with the cone 23 and socket being held in contact with each other by bolts 24 when the cab is mounted on the chassis.

As can be seen clearly from Figure 2, as the cab 10 moves up and down, as indicated by the arrow X, the links 14 each pivot about their mounting bolts 16 which extend generally in the fore and aft direction relative to the tractor chassis. This pivoting of each link 14 is indicated by the arrows Y and is limited by a pin 25 which extends through an arcuate cut out 26 in an extension 27 of each link 14. The vertical movement of the cab at each front corner is therefore limited and the transverse movement of the front corners of the cab relative to the chassis is controlled by the links 14 which themselves extend generally transversely. As will be described below, the pivoting of the links 14 is controlled by the front damper/spring units 12.

Turning now to the rear mounting of the cab, the rear damping/spring units 13 are mounted on the back axle 28 of the chassis by mounting brackets 29 by bolts 30. Each damping unit 13 is connected with a cab support aim 31 by a bolt 32 which extends through a rubber bush bracket (not visible) provided in a block 33 on the lower end 31 of each arm. The upper end 31b of each arm 31 is provided with a generally fore and aft extending projection 34 which is received in a socket 35 provided in the lower portion of each rear corner of the cab the connection 34 being held in the socket 35 by bolts 36.

Also mounted on the rear axle is a further support bracket 37 which is secured thereto by bolts 38. The bracket 37 carries a pin 39 which extends through a generally vertically extending slot 40 formed in the arm 31 to limit the vertical oscillation of the rear corners of the cab.

Also mounted on the brackets 37 is a roll bar 41 which comprises a pair of generally longitudinally extending arms 42 whose rear ends 42a are mounted on the upper ends of brackets 37 by bolts 43 which extend through rubber bushes (not visible) provided in the rear ends 42a and through mounting ears 37a provided on the brackets. The front ends 42b of the arms 42 are non rotatably connected with a generally transversely extending torsion bar 44 so that any tendency of the arms 42 to move in a non-parallel manner about the longitudinal axis Z of the torsion bar 44 results in the torsion bar 44 being loaded in torsion.

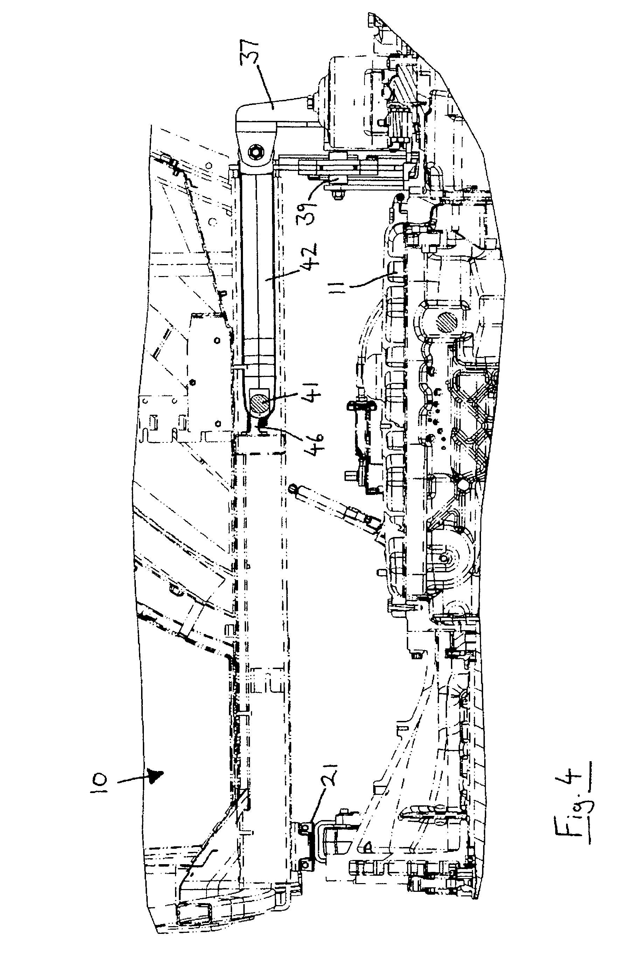

As best seen in Figures 2 and 4, the front ends 42b of the arms 42 are pivotally mounted on the underside of the cab 10 by clamping shells 45 which are bolted to generally rearwardly extending flanges 46 provided on the underside of the cab.

Thus, as will be appreciated, any tendency for the cab to roll relative to the chassis as indicated by the arrow R on Figure 2, will result in the vertical height of the forward end 42b of one of the links 42 varying from the vertical height of the forward end of the other link thus tending to place the torsion bar 44 in torsion.

The vertical movement of the rear corners of the cab is damped by the rear damping/spring units 13 as will be described below.

We have seen from the above that the use of the generally transversely extending mounting links 14 at the front corners of the cab controls the transverse movement of the cab relative to the chassis and the use of the roll bar 41 controls the roll of the cab relative to the chassis. The movement of both the front and rear corners of the cab is additionally controlled by the damping/spring characteristics of the front and rear units 12 and 13.

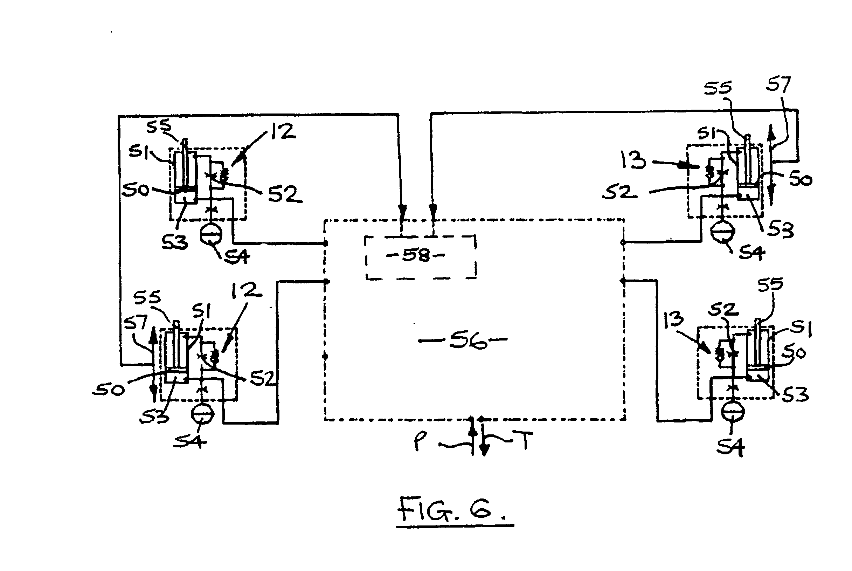

As is conventional in a damper/spring unit used to support a tractor cab, each unit 12,13 (see Figure 6) includes a piston 50 moveable in a cylinder 51 with the damping effect being achieved by the movement of fluid (hydraulic fluid or air) from one side of the piston to the other via a damping orifice 52. The spring effect is achieved by the fluid trapped in the cylinder 51 below the piston 50 in a chamber 53 which is connected with an accumulator 54. The piston is connected with the cab mounting arrangement via a piston rod 55. In the arrangement shown diagrammatically in Figure 6, each unit 12, 13 is connected with a centralised control system 56 which is supplied with pressurised fluid as indicated by the arrow P and which returns surplus fluid to an associated storage tank as indicated by the arrow T. The centralised control system includes various hydraulic valves which both control the pressure within the various parts of the system and also allow the chambers 53 of the damper units 12 and 13 to have further fluid supplied thereto or to have fluid removed there from in order to adjust the support height at each corner of the cab. The cab suspension system is provided with cab height sensors 57 which act as inputs into an electronic control circuit 58 which forms part of the control system 56 in order to enable a desired cab height to be maintained. For example, typically the left hand front damping spring unit 12 and the rear right hand damping unit 13 will be provided with such cab height sensors 57 to enable the cab right height to be controlled. If desired, each damper unit 12, 13 could be provided with its own sensor to provide height inputs signals into the centralized control system 56.

As will be appreciated, the ride height control system can be used to maintain the cab in a generally horizontal attitude at a ride height relative to the chassis which is determined by the tractor operator. This right height will be adjusted by the admission or release of fluid from the appropriate chambers 53 of the dampers 12, 13.

If desired, the ride height control system could be used to arrange for one side of the cab to be higher than the other side when the tractor is in use. Such an arrangement is useful when the cab is being driven across a steeply sloping hill or when the tractor is ploughing when the wheels on one side of the tractor will be in furrow and thus significantly lower than the other wheels of the cab.

Also, as will be appreciated, the above described fluid control system which is shown in Figure 6 is a passive damping system in which the size of the damping orifices 52 does not vary. If desired, the system can be made semi-active by arranging for the size of the orifices 52 to be varied dependant on specified operating parameters of the tractor such as, for example, the cab position relative to the chassis, the tractor speed, the application of the brakes, the throttle position and the gear ratio selected in the tractor gearbox. These parameters are measured or sensed by appropriate sensors and the resulting values fed as inputs to a more complex form of control circuit 58. The electronic control circuit then controls the size of the damping orifices 52 and the quantity of fluid in the chambers 53 of the dampers 12, 13 in accordance with specified control algorithms

Since the precise details of the passive or semi-active damping system do not form part of the present invention they will not be described in any further detail herein.

## Claims

1. A tractor cab suspension for suspending a tractor cab (10) from an associated chassis (11), each corner of the cab being supported by fluid damper/spring unit (12, 13), and a roll bar (41) acting between the cab and chassis to control roll of the cab relative to the chassis, **characterised in that** the damper/spring unit (12) at each of the two front corners of the cab are connected with the chassis via a link (14) of a fixed length and which extends generally transverse relative to the chassis and is pivoted at one end (14b) on the chassis and at the other end (14a) on the cab about axes which extend generally longitudinal relative to the chassis to allow generally vertical movement (X) of the cab relative to the chassis but resist transverse movement of the cab relative to the chassis.

2. A suspension according to Claim 1, wherein limiting means are provided to limit the range of pivoting movement of the link.

3. A suspension according to Claim 2, wherein the limiting means comprises a longitudinally extending pin (25) which is slidably engaged within a guide slot.

4. A suspension according to Claim 3, wherein the guide slot is provided by an arcuate cut out (26) in an extension of the link and the pin is held relative to the chassis.

5. A suspension according to any preceding claim, wherein the damper/spring unit (13) at each of the two rear corners of the cab is connected with the cab via a support arm (31) which has a single degree of freedom in the vertical direction.

6. A suspension according to Claim 5, further comprising rear limiting means to limit the range of vertical movement of the support arm.

7. A suspension according to Claim 6, wherein the rear limiting means includes a vertically extending slot (40) formed in the support arm and a longitudinally extending pin (39) held relative to the chassis which is slidably engaged within said slot.

8. A suspension according to any preceding claim, in which the fluid damper of each damper/spring unit acts through a fixed damping orifice (52) to provide passive damping of the cab relative to the chassis.

9. A suspension according to any one of Claims 1 to 7, in which the fluid damper of each damper/spring unit acts through a variable damping orifice, the size of the damping orifice being varied in response to the variation of one or more tractor operating parameters to provide semi-active damping of the cab relative to the chassis.

10. A suspension according to Claim 8 or 9 in which each fluid damper includes a piston (50) moveable in a chamber (51) with damping being achieved by movement of fluid from one side of the piston to the other via the orifice.

11. A suspension according to Claim 10 in which fluid can be supplied to and exhausted from either side of the piston of each fluid damper via a solenoid operated fluid flow control valve to adjust the height of the cab relative to the chassis.

12. A suspension according to Claim 11 in which one or more height sensors (57) are provided which provide an indication of the height of the cab relative to the chassis to a control unit (58), the control unit controlling the operation of the solenoid operated fluid flow control valves to maintain a specified cab height relative to the chassis.

13. A suspension according to Claim 9 in which said one or more tractor operating parameters include on or more of the following namely cab position relative to the chassis, vehicle speed, brake application, throttle position and gear selected.

14. A suspension according to any preceding claim, in which the roll bar (41) comprises a pair of arms (42) which extend generally longitudinally relative to the chassis, the arms being pivoted at their first ends (42a) on the chassis about axes generally transverse to the chassis and rigidly connected at their second ends (42b) by a torsion bar (44) which extends generally transverse relative to the chassis, the torsion bar also being pivotally connected with the cab for pivoting about its longitudinal axis so that any tendency of the cab to roll relative to the chassis loads the torsion bar in torsion.

## Patentansprüche

1. Aufhängung für eine Kabine eines Zugfahrzeugs oder Traktors zum Aufhängen oder Abstützen (im Folgenden Aufhängen) einer Kabine (10) des Traktors oder Zugfahrzeugs gegenüber einem zugeordneten Chassis (11), wobei jede Ecke der Kabine durch eine fluidische Dämpfer-/Feder-Einheit (12, 13) aufgehängt ist und eine Roll-Stange (41), die zwischen der Kabine und dem Chassis wirkt zur Steuerung oder Regelung eines Rollens der Kabine relativ zu dem Chassis, **dadurch gekennzeichnet, dass** die Dämpfer-/Feder-Einheiten (12) bei jeder der beiden vorderen Ecken der Kabine mit dem Chassis über eine Verbindung (14) mit einer festen Länge verbunden sind, die sich grundsätzlich quer relativ zu dem Chassis erstreckt, an einem Ende (14b) an dem Chassis verschwenkt wird und an dem anderen Ende (14a) an der Kabine verschwenkt wird um Achsen, die sich grundsätzlich in Längsrichtung relativ zu dem Chassis erstrecken zur Ermöglichung einer grundsätzlich vertikalen Bewegung (X) der Kabine relativ zu dem Chassis, aber zur Bereitstellung eines Widerstands gegenüber einer Querbewegung der Kabine relativ zu dem Chassis.

2. Aufhängung nach Anspruch 1, **dadurch gekennzeichnet, dass** begrenzende Mittel zur Begrenzung des Bereichs der Schwenkbewegung der Verbindung vorgesehen sind.

3. Aufhängung nach Anspruch 2, **dadurch gekennzeichnet, dass** das begrenzende Mittel einen sich in Längsrichtung erstreckenden Pin (25) aufweist, der gleitend in einen Führungsschlitz eingreift.

4. Aufhängung nach Anspruch 3, **dadurch gekennzeichnet, dass** der Führungsschlitz durch einen bogenförmigen Ausschnitt (26) in einer Erweiterung der Verbindung bereitgestellt ist und der Pin relativ zu dem Chassis gehalten ist.

5. Aufhängung nach einem der vorhergehenden Ansprüche, **dadurch gekennzeichnet, dass** die Dämpfer-/Feder-Einheit (13) bei jeder der beiden hinteren Ecken der Kabine mit der Kabine über einen Tragarm (31) verbunden ist, der einen einzigen Freiheitsgrad in vertikaler Richtung besitzt.

6. Aufhängung nach Anspruch 5 mit hinteren begrenzenden Mitteln zur Begrenzung des Bereichs der vertikalen Bewegung des Tragarms.

7. Aufhängung nach Anspruch 6, wobei das hintere begrenzende Mittel einen sich vertikal erstreckenden Schlitz (40), der in dem Tragarm gebildet ist, und einen sich in Längsrichtung erstreckenden Pin (39), der relativ zu dem Chassis gehalten ist und gleitend in den Schlitz eingreift, aufweist.

8. Aufhängung nach einem der vorhergehenden Ansprüche, **dadurch gekennzeichnet, dass** der fluidische Dämpfer jeder Dämpfer-/Feder-Einheit durch eine feste Dämpfungsöffnung (52) wirkt, um eine passive Dämpfung der Kabine gegenüber dem Chassis zu gewährleisten.

9. Aufhängung nach einem der Ansprüche 1 bis 7, wobei der fluidische Dämpfer jeder Dämpfer-/Feder-Einheit durch eine variable Dämpfungsöffnung wirkt, wobei die Größe der Dämpfungsöffnung in Abhängigkeit der Variation mindestens eines Betriebsparameters des Traktors oder Zugfahrzeugs variiert wird zur Gewährleistung einer semi-aktiven Dämpfung der Kabine gegenüber dem Chassis.

10. Aufhängung nach Anspruch 8 oder 9, **dadurch gekennzeichnet, dass** jeder fluidische Dämpfer einen Kolben (50) aufweist, der in einer Kammer (51) bewegbar ist, wobei durch eine Bewegung von Fluid von einer Seite des Kolbens über die Öffnung zu der anderen Seite eine Dämpfung herbeigeführt wird.

11. Aufhängung nach Anspruch 10, **dadurch gekennzeichnet, dass** zur Anpassung der Höhe der Kabine relativ zu dem Chassis Fluid zu einer Seite des Kolbens jedes fluidischen Dämpfers zugeführt wird und von dieser entfernt wird durch ein elektromagnetisch beträtigtes Steuer- oder Regelventil, welches einen Fluss des Fluides steuert oder regelt.

12. Aufhängung nach Anspruch 11, wobei mindestens ein Höhensensor (57) vorgesehen ist, der einen Indikator der Höhe der Kabine gegenüber dem Chassis für eine Steuer- oder Regeleinheit (58) bereitstellt, wobei die Steuer- oder Regeleinheit den Betrieb der von Magnetventilen betätigten Steuer- oder Regelventile zur Steuerung des fluidischen Flusses steuert oder regelt, um eine spezifische Höhe der Kabine gegenüber dem Chassis aufrecht zu erhalten.

13. Aufhängung nach Anspruch 9, **dadurch gekennzeichnet, dass** mindestens ein Betriebsparameter des Traktors oder Zugfahrzeugs mindestens einen der Betriebsparameter Kabinenposition relativ zu dem Chassis, Fahrzeuggeschwindigkeit, Bremsbetätigung, Drosselklappenposition und/oder Gangwahl beinhaltet.

14. Aufhängung nach einem der vorhergehenden Ansprüche, **dadurch gekennzeichnet, dass** die Roll-Stange (41) ein Paar von Armen (42) besitzt, die sich grundsätzlich in Längsrichtung relativ zu dem Chassis erstrecken, wobei die Arme an ihren ersten Enden (42a) an dem Chassis um Achsen verschwenkt werden, die grundsätzlich quer zu dem Chassis orientiert sind und an den zweiten Enden (42b) fest verbunden sind durch eine Torsions-Stange (44), die sich grundsätzlich quer zu dem Chassis erstreckt, wobei die Torsions-Stange ebenfalls schwenkbar mit der Kabine verbunden ist zur Verschwenkung um ihre Längsachse, so dass jedwede Tendenz der Kabine hinsichtlich eines Rollens gegenüber dem Chassis die Torsions-Stange mit einer Torsion beaufschlagt.

## Revendications

1. Suspension de cabine de tracteur destinée à suspendre une cabine de tracteur (10) par rapport à un châssis (11) associé, chaque coin de la cabine étant supporté par une unité formant amortisseur fluide/ressort (12, 13), et une barre de roulis (41) agissant entre la cabine et le châssis afin de commander le roulis de la cabine par rapport au châssis, **caractérisée en ce que** l'unité formant amortisseur/ressort (12) à chacun de deux coins avant de la cabine est reliée au châssis par l'intermédiaire d'une biellette (14) d'une longueur fixe et qui s'étend sensiblement transversalement par rapport au châssis et peut pivoter à une première extrémité (14b) sur le châssis et à l'autre extrémité (14a) sur la cabine par rapport à des axes qui s'étendent sensiblement longitudinalement par rapport au châssis afin de permettre un mouvement sensiblement vertical (X) de la cabine par rapport au châssis mais de résister à un mouvement transversal de la cabine par rapport au châssis.

2. Suspension selon la revendication 1, dans laquelle des moyens de limitation sont agencés afin de limiter la plage de mouvement pivotant de la biellette.

3. Suspension selon la revendication 2, dans laquelle les moyens de limitation comprennent une broche s'étendant longitudinalement (25) qui est couplée de manière à pouvoir coulisser à l'intérieur d'une fente de guidage.

4. Suspension selon la revendication 3, dans laquelle la fente de guidage est formée par une découpe courbe (26) suivant l'extension de la biellette et la broche est maintenue par rapport au châssis.

5. Suspension selon l'une quelconque des revendications précédentes, dans laquelle l'unité formant amortisseur/ressort (13) à chacun des deux coins arrière de la cabine est reliée à la cabine par l'intermédiaire d'un bras de support (31) qui présente un seul degré de liberté dans la direction verticale.

6. Suspension selon la revendication 5, comprenant, en outre, des moyens de limitation arrière destinés à limiter la plage de mouvement vertical du bras de support.

7. Suspension selon la revendication 6, dans laquelle le moyen de limitation arrière comporte une fente s'étendant verticalement (40) formée sur le bras de support et une broche s'étendant longitudinalement (39) maintenue par rapport au châssis qui est couplée de manière à coulisser à l'intérieur de ladite fente.

8. Suspension selon l'une quelconque des revendications précédentes, dans laquelle l'amortisseur fluide de chaque unité formant amortisseur/ressort agit à travers un orifice d'amortissement fixe (52) afin d'assurer un amortissement passif de la cabine par rapport au châssis.

9. Suspension selon l'une quelconque des revendications 1 à 7, dans laquelle l'amortisseur fluide de chaque unité formant amortisseur/ressort agit à travers un orifice d'amortissement variable, la taille de l'orifice d'amortissement étant modifiée en réponse à la variation d'un ou plusieurs paramètres de fonctionnement du tracteur afin d'assurer un amortissement semi-actif de la cabine par rapport au châssis.

10. Suspension selon la revendication 8 ou 9, dans laquelle chaque amortisseur fluide comporte un piston (50) pouvant être déplacé dans une chambre (51), l'amortissement étant obtenu par le mouvement du fluide à partir d'un côté du piston vers l'autre à travers l'orifice.

11. Suspension selon la revendication 10; dans la laquelle un fluide peut être délivré vers un côté ou l'autre, et récupéré d'un côté ou de l'autre, du piston de chaque amortisseur fluide par l'intermédiaire d'une électrovanne de commande de débit de fluide afin d'ajuster la hauteur de la cabine par rapport au châssis.

12. Suspension selon la revendication 11, dans laquelle un ou plusieurs capteurs de hauteur (57) sont agencés, délivrant une indication de hauteur de la cabine par rapport au châssis à une unité de commande (58), l'unité de commande commandant le fonctionnement des électrovannes de commande de débit de fluide afin de maintenir une hauteur de cabine spécifiée par rapport au châssis.

13. Suspension selon la revendication 9, dans laquelle un ou plusieurs paramètres de fonctionnement de tracteur comportent un ou plusieurs des suivants, à savoir la position de cabine par rapport au châssis, la vitesse de véhicule, l'application du frein, la position de l'accélérateur et le rapport de vitesse sélectionné.

14. Suspension selon l'une quelconque des revendications précédentes, dans laquelle la barre de roulis (41) comprend une paire de bras (42) qui s'étendent sensiblement longitudinalement par rapport au châssis, les bras pouvant pivoter au niveau de leurs premières extrémités (42a) sur le châssis autour d'axes sensiblement transversaux par rapport au châssis et couplés de manière rigide à leurs secondes extrémités (42b) par une barre de torsion (44) qui s'étend sensiblement transversalement par rapport au châssis, la barre de torsion étant aussi couplée de manière à pouvoir pivoter avec la cabine afin de pivoter autour de son axe longitudinal de telle sorte que toute tendance au roulis de la cabine par rapport au châssis charge la barre de torsion en torsion.
